Europäisches Patentamt

European Patent Office

Office européen des brevets

(19)

(11) Veröffentlichungsnummer: **0 239 658**
B1

(12) **EUROPÄISCHE PATENTSCHRIFT**

(45) Veröffentlichungstag der Patentschrift:
02.11.89

(21) Anmeldenummer: 86104460.0

(22) Anmeldetag: 02.04.86

(51) Int. Cl.⁴: **C04B 28/02**, C04B 41/65, B28C 5/00 // (C04B28/02, 18:16),(C04B28/02, 22:08, 24:02, 24:26, 24:30)

(54) Verfahren zum Verfestigen von Betonbauwerken und zum Herstellen von Mörteln, Betonen oder hieraus bestehende Produkte und ein hierfuer ausgebildeter Zementleim.

(43) Veröffentlichungstag der Anmeldung:
07.10.87 Patentblatt 87/41

(45) Bekanntmachung des Hinweises auf die Patenterteilung:
02.11.89 Patentblatt 89/44

(84) Benannte Vertragsstaaten:
AT BE CH DE FR GB IT LI LU NL SE

(56) Entgegenhaltungen:
EP-A- 0 022 738
EP-A- 0 078 938
DE-A- 3 436 215
FR-A- 2 281 415
LU-A- 83 878
US-A- 4 523 755

(73) Patentinhaber: Sicotan GmbH & Co. KG,
Mühleneschweg 7, D-4500 Osnabrück(DE)

(72) Erfinder: Kempin, Horst, Dipl.-Ing., Lottbekheide 15,
D-2000 Hamburg 36(DE)

(74) Vertreter: Glaeser, Joachim, Dipl.-Ing. et al,
Patentanwälte DIEHL GLAESER HILTL & PARTNER
Königstrasse 28, D-8000 Hamburg 50(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Verfestigen von Betonbauwerken, insbesondere von Wänden, Pfeilern od. dgl., z.B. aus Ziegelsplittbeton, und zum Herstellen von Mörteln, Betonen und hieraus bestehende Produkte unter Verwendung eines Zementleims und einen nach dem Verfahren erhaltenen Zementleim.

Beim Beton handelt es sich um einen künstlichen Stein, der aus einem Gemisch von Zement, Betonzuschlag und Wasser gegebenenfalls auch Betonzusatzmitteln und Betonzusatzstoffen – durch Erhärten des Zementleims (Zement-Wasser-Gemisch) entsteht. Die für die Herstellung des Betons verwendeten Betonzuschläge können verschiedenster Art sein. Es handelt sich hierbei um Gemenge von ungebrochenen und/oder gebrochenen Körnern aus natürlichen und/oder künstlichen mineralischen Stoffen. Dieser Betonzuschlag besteht aus etwa gleich oder verschieden großen Körnern mit dichtem Gefüge.

Neben ungebrochenen Zuschlagstoffen, wie Sand, Kies und Grobkies, finden auch gebrochene Zuschlagstoffe Verwendung, wie Brechsand, Splitt und Schotter. Beim Ziegelsplittbeton handelt es sich um einen Beton, der aus Bindemitteln und ganz oder vorwiegend aus Ziegelbrechgut hergestellt wird.

Betonbauwerke aus Ziegelsplittbeton zeigen jedoch nach längerer Standzeit eine Verringerung ihrer Festigkeit und damit auch eine Verringerung der statischen Eigenschaften, was bedingt ist durch den allmählichen Zerfall des Ziegelsplitts in dem Ziegelsplittbeton, was darauf zurückzuführen ist, daß Ziegelsplitt keine ausreichene Eigenfestigkeit und keinen hohen Frostwiderstand besitzt und im Außenwandbereich zu Zerfall führen kann.

Maßnahmen, um Betonbauwerke aus Ziegelsplittbeton zu sanieren, d.h. um derartige Betonbauwerke nachträglich zu verfestigen, haben jedoch unter Berücksichtigung der Risikofaktoren nicht zu dem gewünschten Erfolg geführt. Die bekannten Maßnahmen, wie das Eindrücken von Zementmilch mit einem relativ hohen Wasseranteil, führen dazu, daß der Ziegelsplittbeton einen hohen Prozentsatz des mit der Zementmilch zugeführten Wassers aufnimmt. Dadurch wird das Wasser dem Zement für seine Hydration entzogen, so daß dem Zement das zur Hydration erforderliche Wasser fehlt.

Durch die Wasseraufnahme durch den Ziegelsplittbeton erfolgt ein Erweichen des Baukörpers mit einer weiteren Verringerung seiner Festigkeit und einer weiteren Beeinflussung seiner Stabilität. Die hohe Wasseraufnahme von Betonbauwerken aus Ziegelsplittbeton während des Verfestigungsvorganges durch Zementmilch hat in zahlreichen Fällen dazu geführt, daß die Feuchtigkeit durch den Putz der Bauwerke hindurchdrang und der Putz von dem Betonbauwerk abbröckelte.

Maßnahmen, wie das Einpressen von Kunststoffen zur Verfestigung von Betonbauwerken aus Ziegelsplittbeton, sind aus Gründen der Brandsicherheit nicht verwendbar, da bei Einwirkung hoher Temperaturen, wie diese z.B. bei einem Brand auftreten, auf mit Kunststoffen verfestigte Betonbauwerke durch den Kunststoff schädigende Giftstoffe freigegeben werden.

Durch die EP-A 0 078 938 sind Säuregruppen enthaltende thermostabile hydrophile Kondensationsprodukte von Aldehyden und Ketonen bekannt, wie sie bei der Reaktion von Ketonen, Aldehyden und Säuregruppen einführenden Verbindungen entstehen. Dabei werden als Ketone symmetrische oder unsymmetrische Ketone mit acyclischen aliphatischen, araliphatischen und/oder aromatischen Resten eingesetzt, wobei aber mindestens ein Rest ein nichtaromatischer Rest ist. Derartige Kondensationsprodukte sind einsetzbar als Verdickungsmittel, Rotationsmittel, oberflächenaktives Mittel, Dispergiermittel, beispielsweise zur Herstellung von Fließbeton oder Fließestrich, und/oder Verflüssigungsmittel, insbesondere für wässrige Systeme.

Durch die Verwendung von Ketonen in Zementleimschlämmen und im Fließbeton ist ein Einsatz nur als Dispergiermittel möglich, jedoch keine verfestigenden Eigenschaften bei einer Bauwerkssanierung sind erreichbar, zumal auch darüber hinaus der Einsatz von derartigen Säuregruppen enthaltende Kondensationsprodukte für eine Bauwerkssanierung nicht wirtschaftlich ist, wegen der hohen Kosten der Ausgangsprodukte.

Daneben ist es aus der US-A 4 523 755 bekannt, Melamin-Formaldehyd-Acrylharzdispersionen in Zementmischungen für die Herstellung von Sportplatzböden u. dgl. als Verfestigungskomponente zu verwenden, doch da bei der Einwirkung von hohen Temperaturen, wie diese bei einem Brand auftreten, mit derartigen Dispersionen verfestigte Betonbauwerke schädigende Giftstoffe durch den Kunststoff freigegeben werden, sind derartige Dispersionen zu einer Bauwerksanierung nicht geeignet.

Nach der EP-A 0 022 738 ist ein Verfahren zum Herstellen von Kolloidmörtel, insbesondere zum Beschichten von Formteilen aus Stahl, wie Leitungsrohren, Kessel u.dgl., und ein gemäß dem Verfahren gewonnenes Produkt bekannt, wobei das Verfahren darin besteht, daß man in einem Mischer einen auf die Zementmenge bezogenen Anteil von 25–60% Wasser mittels eines Rührers in eine Drehbewegung solcher Art versetzt, daß die Umfangsgeschwindigkeit am Außendurchmesser des Rührers mind. 1500 m/Minute beträgt, daß man den Mischer mit Zement beschickt, daß man die Drehbewegung des Rührers beibehält oder auf die Hälfte der Umfangsgeschwindigkeit drosselt und dem Gemisch einen Anteil von 1–2 Teilen Sand pro Zementmenge mit einem Feuchtigkeitsgrad von 5–15% so zuführt, daß der feuchte Sand in das Zentrum des durch das Rühren gebildeten trichterförmigen Profils des Mischgutes gelangt. Insbesondere die Zugabe von Sand bewirkt dabei, daß weniger hochwertige Zemente, die sich wohl gut kolloidieren lassen aber des öfteren Gemische ohne ausreichendes Haftvermögen ergeben, verwendet werden können. Zwar ist hiernach das Mischen von Mörteln zum Beschichten von Metallteilen mit hohen Mischer-Umdrehungszahlen bekannt, doch ist dieses Verfahren nicht bei der Herstellung von Kunstharz enthaltendem Zementleim zum Injizieren oder von Kunstharz enthaltendem Mörtel zur Herstellung von Formkörpern einsetzbar, da der hohe Wasseranteil zu einer Wasseraufnahme durch den Ziegelsplittbeton mit der Folge führt, daß der Baukörper aufweicht und Feuchtigkeit durch den Putz der Bauwerke hindurchdringt.

Die Erfindung löst die Aufgabe, ein Verfahren und einen Zementleim zu schaffen, mit dem Betonbauwerke, z.B. aus Ziegelsplittbeton, wirtschaftlich verfestigt werden können, ohne daß während des Verfestigungsprozesses die Standsicherheit der zu sanierenden Betonbauwerke beeinträchtigt wird, wobei beim Durchfließen des inhomogenen Hohlraumvolumens des zu sanierenden Betonbauwerkes die Fließfähigkeit des Zementleims bei saugfähigem Untergrund nicht gemindert wird und eine Sedimentation ausgeschlossen bleibt, um einen gleichmäßigen Festigkeitsanstieg im gesamten Konstruktionsquerschnitt zu erreichen.

Zur Lösung dieser Aufgabe wird ein Verfahren der eingangs genannten Art vorgeschlagen, nach dem man erfindungsgemäß Zementleim von sahneartiger Konsistenz oder Zementmörtel mit einem guten Fließverhalten, einem hohen Wasserrückhaltevermögen und schneller Anfangshärtung aus einer Mischung aus
a) Wasser,
b) einem Zusatzmittel mit verflüssigenden und fließmittelähnlichen Eigenschaften aus einem alkalikondensationsfähigen Ketonharz und ggfs. einer hohe Verseifungsfestigkeit aufweisenden sowie gleitfähigkeitserhöhenden und verdickend wirkenden Kunstharzdispersion, wie z.B. einer Acrylharzdispersion oder Butadienstyroldispersion oder einem Gemisch hiervon und
c) Zement, insbesondere der Güteklasse PZ 35, PZ 45, PZ 55, HOZ 35, EPZ 35 oder EPZ 45 od.dgl. und gegebenenfalls
d) Zuschlagstoffen
durch Vermischen des Wasser-Zusatzmittelgemisches mit dem Zement bei einer niedrigen Mischgeschwindigkeit in der Anfangsphase und bei einer sich hieran anschließenden hohen Mischgeschwindigkeit vermittels eines hochtourigen Turbomischers herstellt und in die Wandbauteile mit Drücken von 1 bis 3 bar bei dichtem Gefüge bis 40 bar, injiziert oder in Formen eingießt.

Nach einem weiteren Merkmal der Erfindung ist das Verfahren dadurch gekennzeichnet, daß zur Herstellung von etwa 18 l Zementleim in einer ersten Stufe Wasser als Dispergiermittel in einer Menge von 45% mit Glykoläther in einer Menge von unter 1% gemischt, die so erhaltene Mischung mit dem Salz eines Alkalimetalls in einer Menge von etwa 0,2% hochalkalisch eingestellt, worauf der so erhaltenen Lösung ein pulverisiertes Ketonharz in einer Menge von etwa 33% und eine verdickend wirkende Kunstharzdispersion, vorzugsweise Acrylharzdispersion, zur Gleitfähigkeitserhöhung sowie ferner eine weitere verseifungsfeste Kunstharzdispersion, vorzugsweise Acrylharzdispersion oder Butadienstyroldispersion oder ein Gemisch aus einer Acrylharzdispersion mit einer Butadienstyroldispersion in einer Menge von über 20% hinzugegeben, und in einer zweiten Stufe in dem Behälter mit mindestens 30 l Inhalt eines Turbomischers

etwa 8,1 l Wasser mit etwa 1,1 kg des in der ersten Stufe hergestellten Zusatzmittels homogenisiert, anschließend dem Wasser-Zusatzmittelgemisch bei einer geringen Mischgeschwindigkeit bei etwa 500 U/min 25 kg Zement der Güteklasse PZ 55 oder einer anderen geeigneten Güteklasse vorzugsweise mit einer Mahlfeinheit von mindestens 4 800 Blaine hinzugegeben und nach erfolgter Eingabe des Zements die Vermischung mit einer hohen Mischgeschwindigkeit bei etwa 2 800 bis 3 000 U/min vorgenommen wird, wobei sich die sahneartige Konsistenz des Zementleims innerhalb von etwa 30 Sekunden einstellt.

Des weiteren sieht die Erfindung einen Zementleim vor, der dadurch erhalten wird, daß man einen Zementleim von sahneartiger Konsistenz oder Zmentmörtel mit einem guten Fließverhalten, einem hohen Wasserrückhaltevermögen und schneller Anfangshärtung aus einer Mischung aus
a) Wasser,
b) einem Zusatzmittel mit verflüssigenden und fließmittelähnlichen Eigenschaften aus einem alkalikondensationsfähigen Ketonharz und einer eine hohe Verseifungsfestigkeit aufweisenden sowie gleitfähigkeitserhöhenden und verdickend wirkenden, gegebenenfalls Kunstharzdispersion, wie z.B. einer Acrylharzdispersion oder Butadienstyroldispersion oder einem Gemisch hiervon und
c) Zement, insbesondere der Güteklasse PZ 35, PZ 45, PZ 55, HOZ 35, EPZ 35 oder EPZ 45 od. dgl. und gegebenenfalls
d) Zuschlagstoffen
durch Vermischen des Wasser-Zusatzmittelgemisches mit dem Zement bei einer niedrigen Mischgeschwindigkeit in der Anfangsphase und bei einer sich hieran anschließenden hohen Mischgeschwindigkeit vermittels eines hochtourigen Turbomischers herstellt.

Dieser Zementleim besteht ferner gemäß der Erfindung aus einer hochalkalisch mit etwa 0,2% eines Salzes eines Alkalimetalls eingestellten Mischung aus etwa 45% Wasser mit einem Glykoläther in einer unter 1% liegenden Menge, der pulversisiertes Ketonharz in einer Menge von etwa 33%, eine gleitfähigkeitserhöhende Acrylharzdispersion in einer unter 1% liegenden Menge und eine Acrylharzdispersion oder eine Butadienstyroldispersion oder ein Gemisch aus einer Acrylharzdispersion mit einer Butadienstyroldispersion in einer Menge von über 20% zugemischt sind, und einem der Mischung hinzugegebenen Zement.

Das für den Zementleim verwendete Zusatzmittel besteht z.B. aus

| | |
|---|---|
| Wasser | etwa 20% |
| Glykoläther | etwa <0,3% |
| Alkalisalz | etwa <0,2% |
| Melaminharz | etwa 30% |
| Ketonharz | etwa 10% |
| Acrylharz- oder Butadienstyroldispersion | etwa 40% |
| oder aus | |
| Wasser | etwa 85% |
| hochwirksames, nicht ionisiertes Netzmittel | 0,1% |
| mehrwertiger Alkohol | etwa 1% |
| Kalkhydrat | etwa 1% |
| Glykoläther | etwa 1% |
| Entschäumer | <1% |
| Ketonharz | etwa 10%. |

Es hat sich überraschend gezeigt, daß mit einem erfindungsgemäß hergestellten Zementleim Betonwerke aus Ziegelsplittbeton verfestigt werden können, ohne daß bei der Durchführung des Verfahrens eine Erweichung des Baukörpers eintritt, wobei besonders vorteilhaft ist, daß bei der Herstellung des Zementleims zunächst in einer ersten Phase Wasser und Zusatzmittel miteinander vermischt werden, worauf dann in diese Mischung kontinuierlich der Zement eingerührt wird und das Vermischen dann bei einer hohen Umlaufgeschwindigkeit des Mischers erfolgt. Dadurch, daß das Zusatzmittel Ketonharze und/oder Kunststoffdispersionen insbesondere als ein die Fließfähigkeit erhöhendes Mittel enthält, wird eine Fließfähigkeit des Zementleims erreicht, aufgrund der es möglich ist, den Zementleim auch ohne hohe Druckanwendung in die zu sanierenden Betonbauwerke bzw. Schalungen einzubringen. Vorteilhaft ist jedoch die Injizierung des Zementleims in das zu sanierende Bauwerk. Die Zuführung des Zementleims mittels entsprechender Einrichtungen in das zu sanierende Betonbauwerk erfolgt vorzugsweise mit einem geringen Druck, durch den lediglich die schnelle Förderung des Zementleims erreicht werden soll, jedoch auch die Anwendung höherer Drücke ist möglich. Durch eine eventuelle Zugabe von Carbonaten der Alkali- oder Erdalkaligruppen wird dem Zementleim eine Anfangserhärtung verliehen, durch die die Fließfähigkeit des Zementleims nicht beeinträchtigt wird. Mit dem Zementleim sind Betonbauwerke, insbesondere aus Ziegelsplittbeton, verfestig- und sanierbar, doch können auch unter Anwendung des Zementleims oder des Zementmörtels hochfeste Betonwerkteile aller Art hergestellt werden.

Dadurch, daß die im Zementleim enthaltenen Poren in geringer Menge Luft enthalten, beinhaltet der Zementleim eine Vielzahl von kleinsten Luftbläschen, die den Gleit- und Fließvorgang des Zementleims in dem zu sanierenden Betonbauwerk verbessern, wobei der Zementleim auch porenfrei angewandt werden kann.

Eine wesentliche Rolle spielen dabei die in dem Zementleim enthaltenen Kunststoffe, wie Ketonharze und/oder Kunstharzdispersionen, wodurch die Abbindezeit für den Zementleim bzw. für den in dem Zementleim enthaltenen Zement vorverlegt wird insofern, als bereits nach erfolgter Zufuhr des Zementleims in das zu sanierende Betonbauwerk der Zementleim mit dem Zement erhärtet, so daß keine langen Erhärtungszeiten erforderlich sind.

Wesentlich ist, daß der verwendete Zementleim eine Viskosität aufweist, die ein Fließen des Zementleims in dem zu sanierenden Betonbauwerk ermöglicht. Hierzu weist der Zementleim eine sahneartige Konsistenz auf, die dadurch erreicht wird, daß die vorgegebene Menge an Zement mit dem Wasser-Zusatzmittelgemisch zunächst langsam, und zwar mit niedriger Tourenzahl des eingesetzten Mischers vermischt wird und danach erst wird die Tourenzahl wesentlich erhöht, wobei der Zementleim wirksam und der Reifegrad des Zementes vorverlegt wird, bis eine sahneartige Konsistenz entsteht, auch bei W/Z-Faktoren unter 0.35.

Die in dem Zementleim enthaltenen Zusätze betragen etwa 1% bis 5% vom Zementgewicht.

Der besondere Vorteil bei der Verwendung des erfindungsgemäßen Zementleims zur Verfestigung von Ziegelsplittbetonen besteht darin, daß der Zementleim, der in die Hohlräume des Ziegelsplittbetons injiziert wird, nach der Injektion, jedoch vor dem Abbindebeginn, über ein solches Wasserrückhaltevermögen verfügt, daß eine auch kurzfristige weitere Festigkeitsminderung sowohl von Innen- und Außenwandbauteilen nicht stattfindet.

Besonders vorteilhaft ist hierbei die hohe Fließfähigkeit, die der Zementleim besitzt. Hinzu kommt noch, daß beim Durchfließen eines inhomogenen Hohlraumvolumens die Fließfähigkeit bei saugfähigem Untergrund nicht gemindert wird und eine Sedimentation ausgeschlossen bleibt. Insbesondere letzteres ist bei auf dem Markt befindlichen Produkten, den sogenannten Fließhilfen, nicht gegeben. Dies ist aber eine zwingende Voraussetzung, um einen gleichmäßigen Festigkeitsanstieg im gesamten Konstruktionsquerschnitt garantieren zu können. Folgende materialtechnische Forderungen werden dabei erfüllt: gleichmäßiger schneller Druckfestigkeitsanstieg und Biegezugfestigkeitsanstieg, hohe Haftzugfestigkeiten, auch auf trockenem Untergrund. Schnelles Abklingen der zunächst hohen Fließeigenschaften zwecks Minderung übermäßiger hydrostatischer Drücke, z.B. auf geputzte Wandflächenbereiche.

Das erfindungsgemäße Verfahren und der hierfür verwendete Zementleim werden anhand der nachstehenden Beispiele erläutert.

Beispiel 1:

Das für die Herstellung des Zementleims erforderliche Zusatzmittel, das sowohl verflüssigende als auch fließmittelähnliche Eigenschaften aufweist, wird wie folgt hergestellt.

Wasser als Dispergiermittel in einer Menge von etwa 45% wird mit Glykoläther in einer unter 1% liegenden Menge vermischt. Diese Mischung wird mit einem Salz der Alkalimetalle, wie z.B. Natriumchlorid, Natriumsulfat od.dgl. in einer unterhalb etwa 0,2% liegenden Menge hochalkalisch eingestellt. Für diese alkalische Einstellung sind geringe Mengen an Alkalisalz erforderlich.

Der so hergestellten Lösung wird ein alkalikondensationsfähiges Harz, insbesondere Ketonharz, in einer Menge von 33% und eine verdickend wirkende Kunstharzdispersion mit der speziellen Eigenschaft der Gleitfähigkeitserhöhung zugegeben, wobei die zugegebene Menge an Kunstharzdispersion unter 1% liegen sollte. Als Ketonharze kommen unverseifbare, helle, säurefreie Harze zur Anwendung, die durch alkalische Kondensation von Ketonen, z.B. Cyclohexanon oder Methylcyclohexanon entstehen, jedoch auch Harze aus Ketonen, wie z.B. Acetophenon, Naphthalinmethylketon und Formaldehyd können zur Anwendung gelangen. Als Glykoläther findet vorzugsweise Glykolmonomethyläther Verwendung.

Des weiteren wird der so erhaltenen Mischung eine weitere verseifungsfeste Kunstharzdispersion in einer über 20% liegenden Menge hinzugegeben. Die Kunstharzdispersion weist eine hohe Verseifungsfestigkeit auf. Es handelt sich hierbei um Suspensionen von z.B. 20% bis 70% Kunstharzteilchen, wie Polyvinylacetat, Polyvinylchlorid, Polyvinylidenchlorid, Polyacrylsäureester, Polystyrolbutadienverbindungen u. dgl. von wechselnder Größe, meist 0,1 bis 2,5 µm in Wasser, auch mit Zusätzen von organischen Lösungsmitteln, soweit diese zur Anwendung kommen können.

Vorzugsweise kommt als Kunstharzdispersion eine Acrylharzdispersion oder eine Butadienstyroldispersion zur Anwendung, auch ein Gemisch aus einer Acrylharzdispersion mit einer Butadiensystoldispersion kann zur Anwendung kommen. Bei der Acrylharzdispersion handelt es sich um Polymere der Acrylsäure und der Methacrylsäure sowie der entsprechenden Nitrile, Ester, Amide u. dgl. So kann u.a. auch Polymethylmethacrylat Verwendung finden. Bei der Butadienstyroldispersion handelt es sich um Butadien-Polymerisate und Copolymerisate, die durch Polymerisation aus Butadien u.U. mit anderen polymerisierbaren Verbindungen, wie Styrol, Acrylnitril u.dgl. erhalten werden.

Ob eine Acrylharzdispersion oder eine Butadienstyrolharzdispersion zur Anwendung gelangt, hängt vom jeweils gewünschten Luftporengehalt ab, wobei bei der Anwendung von Butadienstyrol ein Entschäumer in sehr geringer Dosierung zugegeben werden muß. Als Entschäumer können natürliche Fette und Öle, jedoch auch künstliche Fette und Öle zur Anwendung gelangen, wie z.B. Paraffin, Fettalkohole, Silikonöle u. dgl.

Für die Herstellung von Zementleimen mit hohem Fließverhalten und hohem Wasserrückhaltevermögen und schneller Anfangserhärtung, wie z. B. bei Ziegelsplittbetonen, ist der Auswahl eines geeigneten Zementes besondere Aufmerksamkeit zu schenken. Überraschenderweise hat es sich gezeigt, daß sich Zemente der Güteklasse vorzugsweise PZ 55 mit einer Mahlfeinheit von mindestens 4 800 Blain bewährt haben. Weiterhin soll die Siebkurve möglichst einen geringen Anteil über 60 µm aufweisen und der Kalkstandard vorzugsweise über 96 betragen.

Für die Herstellung des Zementleims gelangen hochtourige Turbomischer, vorzugsweise mit einer Mischgeschwindigkeit um 3 000 U/min, zur Anwendung, soweit der Zementleim in kürzester Zeit verarbeitungsfähig sein soll.

Für die Herstellung von etwa 18 l fertigen Zementleims wird ein schmaler schlanker Behälter von mindestens 30 l Inhalt, z.B. aus Stahl, eingesetzt. In diesen Behälter werden zunächst etwa 8,1 l Wasser eingegeben, dem dann anschließend etwa 1,1 kg des voranstehend hergestellten Zusatzmittels hinzugegeben wird, wobei die Menge des Zusatzmittels etwa 4,5% entspricht.

Da das Zusatzmittel etwa 50% Wasser, also etwa 0,6 l enthält, ergibt sich eine Gesamtwassermenge von etwa 8,7 l. Daraus ergibt sich ein Wasser-Zement-Faktor von 0,35. Dieses Wasser-Zusatzmittelgemisch wird geringfügig homogenisiert, was auch ohne Maschineneinsatz durchgeführt werden kann.

Anschließend wird dem Wasser-Zusatzmittelgemisch kontinuierlich unter Einsatz des Rührgerätes, z.B. Metabo 1000 S mit Rührquirl – und bei geringer Tourenzahl der Zement in einer Menge von 25 kg zugegeben. Sobald der Zement hinzugegeben worden ist, wird das Rührgerät auf volle Leistung, etwa 2 800 bis 3 000 U/min gebracht.

Die sahneartige Konsistenz, d.h. der sahneartige Charakter, des Zementleims stellt sich bei dem zuvor beschriebenen Verfahren im allgemeinen binnen einer halben Minute ein. Die Konsistenz des Zementleims ist mit herkömmlich den deutschen Normen entsprechenden Geräten nicht prüfbar, da er die Ränder in sekundenschnelle überfließt. Die Prüfung erfolgt zweckmäßigerweise visuell. Der Zementleim muß die Konsistenz einer fettreichen Milchsahne aufweisen, jedoch mit dem Unterschied hierzu, daß sich keine Tropfen bildung ergibt, sondern der Abfließvorgang fadenziehend ähnlich dem von Motoröl nahekommt. Je nach Umgebungstemperatur und Zementart hält dieser Zustand etwa 20 bis 40 Minuten an.

Während dieser Zeit wird die so hergestellte und sogenannte "Zementsahne" mittels geeigneter Einrichtungen, wie Pumpen, vorzugsweise Kolbenpumpen, deren Teile nicht aus Aluminium bestehen sollen, vermittels entsprechender Einführmittel, wie Druckschläuche u. dgl. in die zu sanierenden Wandbauteile injiziert.

Wegen des frühen Reifegrades des Zementleims stellt sich sehr schnell, also in kürzester Zeit, ein pH-Wert von über 11,0 ein, was insbesondere an die Maschinenbauteile erhöhte Anforderungen stellt. Die aufzuwendenden Drücke liegen im allgemeinen bei , bis 3 bar, bei dichtem Gefüge dagegen bis 40 bar.

Werden aus dem durch das zuvor beschriebene Verfahren verbesserte Leichtbetone, z.B. haufwerksporige Ziegelsplittbetone, über Bohrkernentnahmen nach dem siebenten Injektionstag Festigkeitswerte ermittelt, so liegen diese auch vor dem achtundzwanzigsten Tag stets über 10,0 N/mm².

Hierzu sei bemerkt, daß die Ursprungsfestigkeiten häufig zwischen 1,0 und 3,0 N/mm2 liegen.

Beispiel 2:

Das Verfahren zur Sanierung von Betonbauwerken kann auch in der Weise durchgeführt werden, daß eine vorgegebene Menge an Zement, z.B. der Güteklasse PZ 45 oder PZ 55 mit der Menge an Wasser, die der Zement zum Hydratisieren benötigt, in tourenmäßig umschaltbaren Spezialmischern aufbereitet wird, dem so erhaltenen, einen noch bröckeligen Zustand aufweisenden Zementleim vor seinem Erstarren 1% bis 5% Gewichtsteile des Zusatzmittels beigemischt wird, das auch aus einer Kunststoffdispersion, z.B. einem Polykondensat unter Beigabe einer Acrylharzdispersion bestehen kann, hierauf dann den so erhaltenen Zementleim bei einer niederen Mischgeschwindigkeit des Mischers in einer ersten Phase zwecks Erreichung einer homogenen Mischung der Einzelkomponenten vermischt und in einer zweiten Phase den Zementleim durch Erhöhung der Mischgeschwindigkeit durch die erhöhte Energiezufuhr chemisch aufgeschlossen wird, wobei der Zementleim zunächst in eine puddingartige Konsistenz übergeht, jedoch innerhalb sehr kurzer Zeit, z.B. 10 Sekunden Rührzeit, in einen sahneähnlichen Fließzustand übergeht. Der dann erhaltene Zementleim wird unter Ausschluß von Druck oder unter Anwendung von Druck in das zu verfestigende Betonbauwerk eingegeben oder in beliebige, auch filigrane, Formen eingegossen.

Zur Beschleunigung des Erstarrungsverhaltens können dem Zusatzmittel weitere Zusätze, wie z.B. Natriumund/oder Kalium- und/oder Calciumcarbonat beigefügt werden.

Beispiel 3:

Die bisher ermittelten Werte der Druck-, Biegezug- und Haftzugfestigkeiten liegen teilweise zwischen 50% und 100% Anstieg gegenüber bisher bekannten Verfahren.

Bei der Anwendung des Verfahrens bei Ziegelsplittbetonen unterschiedlicher Porosität aus Originalwandbeton, aus einem Bauvorhaben in Berlin stammend, ergaben sich folgende Werte:

| Druckfestigkeit vor dem Injizieren | 2,6 N/mm$^2$ |
|---|---|
| Druckfestigkeit nach dem Injizieren | |
| Druckfestigkeit nach 1 Stunde | 2,7 N/mm$^2$ |
| Druckfestigkeit nach 3 Stunden | 3,8 N/mm$^2$ |
| Druckfestigkeit nach 5 Stunden | 5,2 N/mm$^2$ |
| Druckfestigkeit nach 24 Stunden | 11,4 N/mm$^2$ |
| Druckfestigkeit nach 14 Tagen | 15,9 N/mm$^2$ |
| Bei Estrich, selbstverlaufend ohne Zuschlagstoffe: | |
| Druckfestigkeit nach 1 Tag | 57,6 N/mm$^2$ |
| Druckfestigkeit nach 3 Tagen | 76,0 N/mm$^2$ |
| Druckfestigkeit nach 7 Tagen | 82,0 N/mm$^2$ |
| Druckfestigkeit nach 28 Tagen | 97,4 N/mm$^2$ |
| und bei Estrich, selbstverlaufend mit Zuschlagstoffen – 1:3 gemischt: | |
| Druckfestigkeit nach 1 Tag | 40,2 N/mm$^2$ |
| Druckfestigkeit nach 3 Tagen | 51,8 N/mm$^2$ |
| Druckfestigkeit nach 7 Tagen | 60,1 N/mm$^2$ |
| Druckfestigkeit nach 28 Tagen | 72,0 N/mm$^2$ |
| Biegezugfestigkeiten | |
| nach 1 Tag | 4,0 N/mm$^2$ |
| nach 28 Tagen | 7,6 N/mm$^2$ |

Außer den zuvor beschriebenen Herstellungs- und Verarbeitungsvorgaben bei Ziegelsplittbetonen ist der erfindungsgemäße Zementleim, d.h. die sogenannte "Zementsahne" für Sanierungen an unterschiedlichen Bauobjekten einsetzbar, was an den nachfolgenden Beispielen erläutert wird:

Beispiel 4:

Anwendung des Zementleims zur Rißverpressung:
Unter Verwendung des voranstehend beschriebenen und hergestellten Zementleims wird der Zementleim mit geeigneten Förderpumpen, insbesondere Hochdruckpumpen, mit Drücken bis 100 bar in zuvor mit Druckwasser gereinigte und somit vorgenäßte Risse an Stahlbetonteilen eingebracht. Die Rißweiten betrugen minimal etwa 80 bis 100 µm und maximal bis 1 mm. An Kontrollöffnungen und in einem Fall – Abdeckung eines Risses mit Panzerglas – zeigte sich, daß der Zementleim von sahneartiger Konsistenz zunächst strömungstechnischen Abhängigkeiten im Rißverlauf folgte und bei Abklingen des Injektionsdrucks den Gravitätsgesetzen folgend nach unten abgelaufen ist. Letzteres wird durch das Raumgewicht von 2,0 kg/l gegenüber 1,0 kg/l für Wasser erklärt. Dies bedeutet, daß Restwasser, welches in den Rissen kapillar festgehalten wird, keinen Störfaktor darstellt, zumal zwischen diesem Wasser und der "Zementsahne" je nach Strömungsgeschwindigkeit des injizierten Zementleims keine oder nur eine geringe Vermischung stattfindet. Als weiteres Beispiel sei angeführt, daß bei dem Hochgeschwindigkeitsversuch der Deutschen Bundesbahn in Ost-Westfalen zwischen den waagerecht liegenden verschiedenen Betonschichten durch Meßfahrten in einem Teilbereich von etwa 40 m Länge Schichten abgesackt waren. Die entstandene halbkreisförmige Hohlstellenlinse hatte dabei eine maximale Öffnungshöhe am Rande des Bahnkörpers von etwa 4 bis 5 mm. Diese Hohlstellenlinse wurde im Austauschverfahren zur bislang geübten EpoxidharzInjektionstechnik im Niederdruckverfahren mit dem erfindungsgemäßen Zementleim injiziert. Der Vorteil des zuvor beschriebenen Verfahrens liegt nicht nur darin begründet, daß das Verfahren deutlich preisgünstiger und damit wirtschaftlicher ist, sondern daß die sonst aufwendige Vortrocknung, z.B. mittels Heißluft, bei Herstellung und Anwendung des Zementleims vermieden werden konnte. Die an gesondert hergestellten Prüfkörpern ermittelten Druckfestigkeiten betrugen nach 10 Tagen Zementleimalter im Mittel 88,0 N/mm².

Der Zementleim kann auch auf feuchtem Untergrund angewendet werden, ohne daß im Haftverbund Störungen, die bei der Anwendung von Kurzharzdispersionen für diese typisch sind.

Weiterhin wurde bei einem Bogenbrückenbauwerk aus Natursteinblöcken im Stadtgebiet von Marburg zwecks druckfester Abstandshaltung der Fugen, bei denen die Distanzschieferplättchen überwiegend zerquetscht waren, zur Ausfüllung der Fugenhohlräume mit dem zuvor beschriebenen Zementleim Injektionsdrücke bis etwa 130 bar gefahren. Im Gegensatz zu herkömmlichen Zementleimen, die nicht das erfindungsgemäße Zusatzmittel beinhalten und bei denen bei vergleichsweise hohen Drücken erfahrungsgemäß eine Abspaltung des Wassers vom Zementkorn stattfindet, gab es bei der Anwendung des erfindungsgemäßen Zementleims keine sogenannten Verstopfer. Die Homogenität des Zementleimes blieb in vollem Umfang erhalten.

Diese "Verstopfer" werden im Prinzip verursacht durch die plättchenartige Struktur des einzelnen Zementkorns, was bei hohen Drücken zu einer Verkeilung des Zementleims führt. Erfahrungsgemäß sind je nach Zementart mit herkömmlichen Zementleimen und Zusatzmitteln nur Drücke bis etwa 30 bar möglich.

Beispiel 5:

Da sich die Zugabe von Zuschlagstoffen bei der zuvor angegebenen Zusammensetzung des Zusatzmittels I nicht vorteilhaft bewährt hat, dies aber eine Anforderung der Praxis ist, ist nachstehende Alternative aufgefunden worden:

Hiernach besteht das Zusatzmittel für den Zementleim beispielsweise aus:

| Wasser | etwa 20% |
|---|---|
| Glykoläther | etwa <0,3% |
| Alkalisalz | etwa <0,2% |
| Melaminharz | etwa 30% |
| Ketonharz | etwa 10% |
| Acrylharz- oder Butadienstyroldispersion | etwa 40% |

Die Komponenten der Harzanteile können dabei variiert werden.

Hiernach ist das Zusatzmittel für den Zementleim angepaßt worden, um eine optimale Verarbeitung des Zementleims mit Zuschlagstoffen zu ermöglichen. Dabei werden die Zementleimeigenschaften beibehalten, wobei auch das Zusatzmittel für den Zementleim die wie voranstehend beschriebenen Komponenten beinhalten kann, wobei als Komponente sich besonders vorteilhaft Melaminharze erwiesen haben.

Die zuvor beschriebenen zement- als auch gerätetechnischen Abhängigkeiten sind auf das hier beschriebene Zusatzmittel bzw. den mit diesem Zusatzmittel herzustellenden Zementleim mit seinen spezifischen Eigenschaften übertragbar.

Im Gegensatz zu dem im vorangegangenen Beispiel beschriebener Zusatzmittel kann für die Herstellung des Zementleims vorzugsweise Zement der Güteklasse PZ 45 benutzt werden, wobei der wie zuvor hergestellte Zementleim in Ein- vorteilhafterweise Zwei-Phasen-Mischung Zuschlagstoffe aufnehmen kann. Der zu erreichende Wasser/Zement-Faktor hängt überwiegend von den Anforderungen – insbesondere Druckfestigkeiten – ab und liegt im allgemeinen zwischen 0,35 und 0,40. Ein Mischungsverhältnis des Zementleims zu den Zuschlagstoffen ist dabei den jeweiligen Gegebenheiten anpaßbar. Es ist auch möglich, mit diesem Zusatzmittel Leichtbetone mit Gewichten um etwa 1 kg/l herzustellen, ohne daß die Leichtzuschläge im Zementleim aufschwimmen. Auch der Leichtmörtel bleibt homogen und weist hohe Druck- und Biegezugfestigkeiten auf.

Mit diesem Zusatzmittel und Zement, vorzugsweise der Güteklase PZ 45, aufgefüllt mit Zuschlagstoffen, wie z.B. Quarzsand und Basaltsplitt feinerer Körnung, kann der Mörtel auf zwei verschiedene Arten hergestellt werden.

a) Die erste Herstellungsart wäre, wie zuvor beschrieben, die Herstellung des Zementleims und Zugabe der Zuschlagstoffe in einer gesonderten Mischanlage. Die Dosierung beträgt hier 3 bis 5% vom Zementgewicht.

b) Das zweite Herstellungsverfahren besteht darin, daß in einem Zwangsmischer nach Zugabe des Wassers, des Zusatzmittels, des Zementes und der feinsten Körnung, z.B. über eine Wirbelereinrichtung, die sahneartigen Eigenschaften des Mörtels ebenfalls erreicht werden. Im allgemeinen wird hier eine um 1% höhere Dosierung des Zusatzmittels, bezogen auf den Zementgehalt, erforderlich. Es ist weiterhin möglich, soweit der Mischer, gleich welcher Größe, als schmales, schlankes Gefäß ausgebildet ist, den Zementleim zwecks Erzielung des sahneartigen Charakters mit einer hochtourigen Turboeinrichtung herzustellen. Je nach Art des Gefäßes braucht neben dem Zement kein Zuschlagstoff – z.B. Quarzsand – oder dieser nur in Teilmengen zugegeben werden- Ob dies vorgenommen wird, hängt von der Gestaltung des Rührgefäßes ab. Wesentlich ist dabei, daß während der Mischphase zwischen Wasser, Zusatzmittel und Zement das Rührwerkzeug möglichst tief in den Zementleim eintaucht, um das Einschlagen von Luft möglichst zu verhindern. Es sei denn, es wird ein Luftporenmörtel oder -beton gewünscht.

Rasterelektronenmikroskopische Untersuchungen haben ergeben, daß die einmal eingeschlagene Luft nicht mehr oder nur sehr begrenzt aus dem Zementleim oder dem Zementmörtel ausgetrieben werden kann, so daß die eingeschlagene Luft in diesen gehalten wird.

Stehen für die zuvor beschriebenen Mischvorgänge Hochleistungsmotoren zur Verfügung, z.B. mit 100 KW oder mehr, können auch Umdrehungszahlen zur Anwendung kommen, die erheblich über 3 000 U/min liegen. Je nach Anwendungsfall sind die Rührwerke selbst entsprechend steif und abriebfest zu gestalten. Wird z.B. ähnlich wie in der Disolverrührtechnik mit Umdrehungen von etwa 8 000 oder 10 000 Touren gearbeitet, kann auch groberer Zement, z.B. PZ 35, verwendet werden, da durch die erhebliche Energiezuführung zunächst, wie durch Schock-Gefrier-Verfahren in glukosehaltigem Medium nachgewiesen, der Zement kurzfristig auf Mahlfeinheiten gebracht werden kann, die sich von der Mahlfeinheit eines Zements mit der Güteklasse PZ 55 nicht wesentlich unterscheiden.

Die zuvor beschriebenen Eigenschaften des Zementleims sind auch annähernd erreichbar mit Zementen der Güteklasse HOZ 35, EPZ 35 bzw. EPZ 45 und schlackensandreichen HOZ der Klasse Z 35, z.B. das unter dem Handelsnamen Aquafirm eingetragene Produkt, wobei sich bei diesen Zementen W/Z-Werte bis etwa 0,30 erreichen lassen.

Ob hierbei eine Teilzugabe des feineren Zuschlagstoffs möglich ist, hängt nicht nur von dem Kubus des Rührgefäßes ab, sondern vielmehr davon, ob das Rührwerk über ein niedertouriges Getriebe verfügt, d.h. daß die erste Mischphase z.B. bei 3 000 U/min erfolgt und die zweite Hauptmischphase nur z.B. über 15 Sekunden bei z.B. einer Tourenzahl von 6 000 oder 10 000 U/min.

Als Beispiel für einen Feinmörtel mittlerer Festigkeit zum Zwecke der Sicherung einer durch Schwerlastverkehr befahrenen Straße wurde eine Teilfläche mit diesem Leimmörtel belegt. Entgegen den Richtlinien für die Ausbesserung von Betonfahrbahnen wurde in einer Dicke von etwa 6 bis 18 mm ein Mörtel im Mischungsverhältnis Zement: Zuschlagstoff = 1:3 im Zwei-Phasen-Mischvorgang unter Verwendung eines Zements der Güteklasse PZ 45 auf eine zuvor mit Druckwasser – etwa 1 000 bar – gereinigte alte Fahrbahnplatte aufgebracht. Auf die gereinigte Fläche wurde zunächst eine reine Zementleimmischung bzw. Zementmörtelmischung mit 8% des Zusatzmittels, bezogen auf das Zementgewicht, aufgetragen und eingebürstet. Daran anschließend wurde der Zementmörtel – nicht verdichtet mit Verdichtungsgeräten – ausgegossen und glatt abgezogen.

Die durchgeführten Haftzugprüfungen haben im Mittel Haftzugfestigkeiten von 3,8 N/mm² ergeben, wobei der Bruch stets im Unterbeton eintrat. Die Winterzeit mit Frost- und Tausalzbelastungen haben die Versuchsplatten bislang mangelfrei überstanden.

Beispiel 6:

Eine weitere Variante eines Zusatzmittels zum Zwecke der Herstellung steifer Betone mit hohen Früh- und Endfestigkeiten besteht aus folgenden Komponenten:

| | |
|---|---|
| Wasser | etwa 85% |
| hochwirksames, nicht ionisiertes Netzmittel | etwa 0,1% |
| mehrwertiger Alkohol | etwa 1% |
| Kalkhydrat | etwa 1% |
| Glykoläther | etwa 1% |
| Entschäumer | etwa 0,1% |
| z.B. Ketonharz | etwa 10% |

Als mehrwertige Alkohole können Glykole, andernfalls auch Diole und auch höherwertige Alkohole zur Anwendung gelangen. Neben aromatischen Alkoholen können auch aliphatische Alkohole verwendet werden. Als Netzmittel kommen die an sich bekannten Netzmittel zur Anwendung, wie z.B. Saponine, Alkylsulfate, Alkylsufonate od. dgl. zur Verwendung. Als Ketonharze finden die voranstehend beschriebenen Verbindungen Anwendung, wobei jedoch auch andere Kunststoffdispersionen zur Anwendung gelangen können.

Bei einer Dosierung zwischen 0,3 und 1,0% vom Zementgewicht wird die Verdichtungswilligkeit unter somit gleichen Herstellungsbedingungen erheblich gesteigert. Entsprechend nimmt das Raumgewicht des Fertigproduktes bei gleichzeitiger Erhöhung der Früh- und Endfestigkeiten zu.

Die voranstehend angegebenen Prozentzahlen beziehen sich auf Gewichtsprozente.

## Patentansprüche

1. Verfahren zum Verfestigen von Betonbauwerken, insbesondere von Wänden, Pfeilern od. dgl., z.B. aus Ziegelsplittbeton, und zum Herstellen von Mörteln, Betonen oder hieraus bestehende Produkte, unter Verwendung eines Zementleims, dadurch gekennzeichnet, daß man einen Zementleim von sahneartiger Konsistenz oder Zementmörtel mit einem guten Fließverhalten, einem hohen Wasserrückhaltevermögen und schneller Anfangshärtung aus einerm Mischung aus

a) Wasser,

b) einem Zusatzmittel mit verflüssigenden und fließmittelähnlichen Eigenschaften aus einem alkalikondensationsfähigen Ketonharz und gegebenenfalls einer eine hohe Verseifungsfestigkeit aufweisenden sowie gleitfähigkeitserhöhenden und verdickend wirkenden Kunstharzdispersion, wie z.B. einer Acrylharzdispersion oder Butadienstyroldispersion oder einem Gemisch hiervon und

c) Zement, insbesondere der Güteklasse PZ 35, PZ 45, PZ 55, HOZ 35, EPZ 35 oder EPZ 45 und gegebenenfalls

d) Zuschlagsstoffen

durch Vermischen des Wasser-Zusatzmittelgemisches mit dem Zement bei einer niedrigen Mischgeschwindigkeit in der Anfangsphase und bei einer sich hieran anschliessenden hohen Mischgeschwindigkeit vermittels eines hochtourigen Turbomischers herstellt und in die Wandbauteile mit Drücken von 1 bis 3 bar, bei dichtem Gefüge bis 40 bar, injiziert oder in Formen eingießt.

2. Verfahren nach Anspruch 1, dadurch gekennzeichnet, daß zur Herstellung von etwa 18 l Zementleim in einer ersten Stufe Wasser als Dispergiermittel in einer Menge von 45% mit Glykoläther in einer Menge von unter 1% gemischt, die so erhaltene Mischung mit dem Salz eines Alkalimetalls in einer Menge von etwa 0,2% hochalkalisch eingestellt, worauf der so erhaltenen Lösung ein pulverisiertes Ketonharz in einer Menge von etwa 33% und eine verdickend wirkende Kunstharzdispersion, vorzugsweise Acrylharzdispersion, zur Gleitfähigkeitserhöhung sowie ferner eine weitere verseifungsfeste Kunstharzdispersion, vorzugsweise Acrylharzdispersion oder Butadienstyroldispersion oder ein Gemisch aus einer Acrylharzdispersion mit einer Butadienstyroldispersion in einer Menge von über 20% hinzugegeben, und in einer zweiten Stufe in dem Behälter mit mindestens 30 l Inhalt eines Turbomischers etwa 8,1 l Wasser mit etwa 1,1 kg des in der ersten Stufe hergestellten Zusatzmittels homogenisiert, anschließend dem Wasser-Zusatzmittelgemisch bei einer geringen Mischgeschwindigkeit bei etwa 500 U/mind 25 kg Zement der Güteklasse PZ 55 oder einer anderen geeigneten Güteklasse vorzugsweise mit einer Mahlfeinheit von mindestens 4800 Blaine hinzugegeben und nach erfolgter Eingabe des Zements die Vermischung mit einer hohen Mischgeschwindigkeit bei etwa 2.800 bis 3000 U/min vorgenommen wird, wobei sich die sahneartige Konsistenz des Zementleims innerhalb von etwa 30 Sekunden einstellt.

3. Verfahren nach Anspruch 1 oder 2, dadurch gekennzeichnet, daß während der Mischphase zwischen Wasser, Zusatzmittel und Zement das Rührwerkzeug des Mischers zur Verhinderung des Einschlagens von Luft tief in das Gemisch eingetaucht wird.

4. Zementleim von sahneartiger Konsistenz zum Verfestigen von Betonbauwerken, insbesondere von Wänden, Pfeilern od. dgl., oder Zementmörtel mit einem guten Fließverhalten, einem hohen Wasserrückhaltevermögen und schneller Anfangshärtung, hergestellt aus einer Mischung aus

a) Wasser,

b) einem Zusatzmittel mit verflüssigenden und fließmittelähnlichen Eigenschaften aus einem alkalikondensationsfähigen Ketonharz und gegebenenfalls einer eine hohe Verseifungsfestigkeit aufweisenden sowie gleitfähigkeitserhöhenden und verdickend wirkenden Kunstharzdispersion, wie z.B. einer Acrylharzdispersion oder Butadienstyroldispersion oder einem Gemisch hiervon und

c) Zement, insbesondere der Güteklasse PZ 35, PZ 45, PZ 55, HOZ 35, EPZ 35 oder EPZ 45 und gegebenenfalls

d) Zuschlagsstoffen

durch Vermischen des Wasser-Zusatzmittelgemisches mit dem Zement bei einer niedrigen Mischgeschwindigkeit in der Anfangsphase und bei einer sich hieran anschliessenden hohen Mischgeschwindigkeit vermittels eines hochtourigen Turbomischers.

5. Zementleim nach Anspruch 4, dadurch gekennzeichnet, daß der Zementleim aus einer hochalkalisch mit etwa 0,2% eines Salzes eines Alkalimetalls eingestellten Mischung aus etwa 45% Wasser mit einem Glykoläther in einer unter 1% liegenden Menge, der pulverisiertes Ketonharz in einer Menge von etwa 33%, eine gleitfähigkeitserhöhende Acrylharzdispersion in einer unter 1% liegenden Menge und eine Acrylharzdispersion oder eine Butadienstyroldispersion oder ein Gemisch aus einer Acrylharzdispersion mit einer Butadienstyroldispersion in einer Menge von über 20% zugemischt sind, und einem der Mischung hinzugegebenen Zement besteht.

6. Zementleim nach Anspruch 4, dadurch gekennzeichnet, daß das Zusatzmittel aus

| Wasser | etwa 20% |
|---|---|
| Glykoläther | etwa <0,3% |
| Alkalisalz | etwa <0,2% |
| Melaminharz | etwa 30% |
| Ketonharz | etwa 10% |
| Acrylharz- oder Butadienstyroldispersion | etwa 40% |

besteht.

7. Zementleim nach Anspruch 4, dadurch gekennzeichnet, daß das Zusatzmittel aus

| Wasser | etwa 85% |
|---|---|
| hochwirksames, nicht ionisiertes Netzmittel | etwa 0,1% |
| mehrwertiger Alkohol | etwa 1% |
| Kalkhydrat | etwa 1% |
| Glykoläther | etwa 1% |
| Entschäumer | etwa 0,1% |
| Ketonharz | etwa 10% |

besteht.

## Claims

1. Process for solidifying and strengthening concrete structures, particularly walls, pillars, and the like, e.g. of broken brick concrete, and for producing mortars, concretes or products consisting thereof, by using a cement glue, characterized in that a cement glue of cream-like consistency or cement mortar with good flowability, a high water retention value and fast initial setting is produced of a mixture of
a) water,
b) an additive having liquefying and flux-like properties and consisting of a ketone resin capable of alkalicondensation and optionally a synthetic resin dispersion exhibiting a high saponification resistance and also increasing slidability and having a thickening effect, like e.g. an acrylic resin dispersion or a butadiene styrene dispersion or a mixture thereof and
c) cement, particularly of quality grade PZ 35, PZ 45, PZ 55, HOZ 35, EPZ 35 or EPZ 45, and optionally
d) aggregates
by mixing the water-additive mixture with the cement at a low rate of mixing in the initial phase and a subsequent high rate of mixing by means of a highspeed turbine mixer and is injected into the wall elements with pressures of 1 to 3 bar, in case of compact structures of up to 40 bar, or poured into moulds.

2. Process according to claim 1, characterized in that for the production of about 18 l of cement glue, in a first step, water as dispersing agent in an amount of 45% is mixed with glycol ether in an amount of less than 1%, that the obtained mixture is set to a highly alkaline state with the salt of an alkali metal in an amount of about 0.2%, whereupon to the solution obtained there are added an pulverized ketone resin in an amount of about 33% and a synthetic resin dispersion having a thickening effect, preferably an acrylic resin dispersion, for increasing flowability, as well as also a further synthetic resin dispersion resistant to saponification, preferably an acrylic resin dispersion or a butadiene styrene dispersion or a mixture of an acrylic resin dispersion with a butadiene styrene dispersion in an amount of more than 20%, and, in a second step, in the at least 30-l-tank of a turbine mixer about 8.1 l of water are homogenized with about 1.1 kg of the additive as produced in the first step, subsequently there is added to the water-additive mixture at a low mixing rate of about 500 RPM 25 kg of cement of quality grade PZ 55 or another suitable quality grade preferably with a grinding fineness of at least 4,800 Blaine and after the completed feeding of the cement the mixing is carried out at a high mixing rate of about 2,800 to 3,000 RPM, the cream-like consistency of the cement glue occurring within about 30 seconds.

3. Process according to claim 1 or 2 characterized in that during the mixing phase between water, additive and cement the stirring device of the mixer is immersed deeply into the mixture in order to avoid the beating in of air.

4. Cement glue of cream-like consistency for solidifying and strengthening concrete structures, particularly walls, pillars and the like, or cement mortar having good flowability, a high water retention value and fast initial setting, produced from a mixture of
a) water,
b) an additive having liquefying and flux-like properties and consisting of a ketone resin capable of alkalicondensation and optionally a synthetic resin dispersion exhibiting a high saponification resistance and also increasing slidability and having a thickening effect, like e.g. an acrylic resin dispersion or butadiene styrene dispersion or a mixture thereof and
c) cement, particularly of quality grade PZ 35, PZ 45, PZ 55, HOZ 35, EPZ 35 or EPZ 45, and optionally
d) aggregates
by mixing the water-additive mixture with the cement at a low rate of mixing in the initial phase and a subsequent high rate of mixing by means of a highspeed turbine mixer.

5. Cement glue according to claim 4, characterized in that said cement glue being a mixture set to a highly alkaline state with about 0.2% of a salt of an alkali metal, and consisting of about 45% of water with a glycol ether in an amount of less than 1%, to which there are admixed pulverized ketone resin in an amount of about 33%, an acrylic resin dispersion increasing slidability in an amount of less than 1% and an acrylic resin dispersion or a butadiene styrene dispersion or a mixture of an acrylic resin dispersion with a butadiene styrene dispersion in an amount of more than 20%, and a cement added to the mixture.

6. Cement glue according to claim 4, characterized in that the additive consists of

| | |
|---|---|
| water | about 20% |
| glykol ether | about <0.3% |
| alkali salt | about <0.2% |
| melamine resin | about 305 |
| ketone resin | about 10% |
| acrylic resin dispersion or butadiene styrene dispersion | about 40% |

7. Cement glue according to claim 4, characterized in that the additive consists of

| | |
|---|---|
| water | about 85% |
| highly active, unionized wetting agent | about 0.1% |
| polyvalent alcohol | about 1% |
| lime hydrate | about 1% |
| glykol ether | about 1% |
| defoamer | about 0.1% |
| ketone resin | about 10% |

**Revendications**

1. Procédé de consolidation d'ouvrages en béton, en particulier de parois, piliers ou éléments similaires, par exemple en béton de briqués concassées et de production de mortiers, de bétons, ou de produits constitués de ceux-ci, par utilisation d'une pâte de ciment, caractérisé en ce que l'on crée une pâte de ciment de consistance crémeuse ou un mortier de ciment, à bonne capacité d'écoulement, à capacité de rétention d'eau élevée et à prise initiale rapide à partir d'un mélange constitué

a) d'eau,

b) d'un additif, présentant des propriétés fluidifiantes et analogues à celles d'un solvant, consistant en une résine cétonique susceptible de condensation alcaline et, éventuellement, une dispersion de résine synthétique à capacité de saponification élevée, augmentant l'aptitude à l'écoulement et agissant comme épaississant, comme par exemple une dispersion de résine acrylique ou une dispersion de butadiène-styrène ou un mélange de ces produits et

c) de ciment en particulier de la qualité PZ 35, PZ 45, PZ 55, HOZ 35, EPZ 35 ou EPZ 45, et éventuellement

d) de matériaux d'addition, en mélangeant, dans la phase initiale, le mélange d'eau et d'additif avec le ciment à une vitesse de mélange réduite, et, dans la phase qui suit, à une vitesse de mélange élevée, à l'aide d'un turbomélangeur à vitesse de rotation élevée, et en ce qu'on injecte cette pâte de ciment dans les composants de parois, ou on la coule dans des moules sous des pressions de 1 à 3 bars allant jusqu'à 40 bars pour des structures étanches.

2. Procédé selon la revendication 1, caractérisé en ce que, pour la fabrication d'environ 18 litres de pâte de ciment, on mélange dans une première phase de l'eau en proportion de 45% comme agent de dispersion, avec du glycoléther en proportion inférieure à 1%, on rend le mélange ainsi obtenu fortement alcalin grâce au sel d'un métal alcalin en proportion d'environ 0,2%, à la suite de quoi on ajoute à la solution ainsi obtenue une résine cétonique pulvérisée en proportion d'environ 33% et une dispersion de résine synthétique agissant comme épaississant, de préférence une dispersion de résine acrylique, pour augmenter l'aptitude à l'écoulement, ainsi qu'en outre une autre dispersion de résine synthétique résistant à la saponification, par exemple une dispersion de résine acrylique ou une dispersion de butadiène-styrène ou un mélange de dispersion de résine acrylique et de dispersion de butadiène-styrène en quantité supérieure à 20%, et en ce que dans une deuxième phase on homogénéise, dans le réservoir d'un turbomélangeur d'environ 30 litres de contenance, environ 8,1 litres d'eau avec environ 1,1 kg de l'additif produit dans la première phase, en ce qu'ensuite on ajoute au mélange d'eau et d'additif à une faible vitesse de mélange d'environ 500 tours/minute 25 kg de ciment de qualité PZ 55 ou d'une autre qualité appropriée, de préférence d'un degré de mouture au moins égal à 4 800 Blaine et en ce qu'après avoir introduit le ciment, on brasse le mélange avec une vitesse élevée d'environ 2 800 à 3 000 tours/minute, la consistance crémeuse de la pâte de ciment apparaissant en 30 secondes environ.

3. Procédé selon la revendication 1 ou 2, caractérisé en ce que pendant la phase de mélange de l'eau, de l'additif et du ciment, l'agitateur du mélangeur est profondément plongé dans le mélange pour éviter l'introduction d'air.

4. Pâte de ciment de consistance crémeuse destinée à la consolidation d'ouvrages en béton, en particulier de parois, piliers ou éléments similaires, ou mortiers de ciment à bonne capacité d'écoulement, à capacité élevée de rétention d'eau et à prise initiale rapide, fabriqués a partir d'un mélange

a) d'eau,

b) d'un additif, présentant des propriétés fluidifiantes et analogues à celles d'un solvant, consistant en une résine cétonique susceptible de condensation alcaline et, éventuellement, en une dispersion de résine synthétique à capacité de saponification élevée, augmentant l'aptitude à l'écoulement et agissant comme épaississant, comme par exemple une dispersion de résine acrylique ou une dispersion de butadiène-styrène ou un mélange de ces produits et

c) de ciment en particulier de la qualité PZ 35, PZ 45, PZ 55, HOZ 35, EPZ 35 ou EPZ 45, et éventuellement

d) de matériaux d'addition

en mélangeant, dans la phase initiale, le mélange d'eau et d'additif avec le ciment à une vitesse de mélange réduite, et, dans la phase qui suit, à une vitesse de mélange élevée à l'aide d'un turbomélangeur à vitesse de rotation élevée.

5. Pâte de ciment selon la revendication 4, caractérisée en ce que la pâte de ciment se compose d'un mélange d'environ 45% d'eau avec moins de 1% d'étherglycol rendu fortement alcalin par addition de 0,2% d'un sel d'un métal alcalin, de la résine cétonique pulvérisée en quantité d'environ 33%, d'une dispersion de résine acrylique en quantité inférieure à 1% pour augmenter l'aptitude à l'écoulement, et d'une dispersion de résine acrylique ou d'une dispersion de butadiène-styrène ou d'un mélange de dispersion de résine acrylique et d'une dispersion de butadiène-styrène en quantité supérieure à 20% et d'un ciment ajouté au mélange.

6. Pâte de ciment selon la revendication 4, caractérisée en ce que l'additif se compose de

| | |
|---|---|
| eau | environ 20% |
| étherglycol | environ <0,3% |
| sel alcalin | environ <0,2% |
| résine de mélamine | environ 30% |
| résine cétonique | environ 10% |
| dispersion de résine acrylique ou de butadiène-styrène | environ 40% |

7. Pâte de ciment selon la revendication 4, caractérisée en ce que l'additif se compose de

| | |
|---|---|
| eau | environ 85% |
| agent réticulant non ionisé à haute efficacité | environ 0,1% |
| polyalcool | environ 1% |
| chaux hydratée | environ 1% |
| étherglycol | environ 1% |
| antimoussant | environ 0,1% |
| résine cétonique | environ 10% |